(19) **Europäisches Patentamt European Patent Office Office européen des brevets**

(11) **EP 4 549 994 A1**

(12) **EUROPEAN PATENT APPLICATION**

(43) Date of publication:
07.05.2025 Bulletin 2025/19

(21) Application number: 24209688.1

(22) Date of filing: 30.10.2024

(51) International Patent Classification (IPC):
*G01S 7/41* (2006.01)    *G01S 13/90* (2006.01)
*H04N 19/00* (2014.01)

(52) Cooperative Patent Classification (CPC):
**G01S 13/9027; G01S 7/417; H04N 19/46;
H04N 19/86**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.11.2023 DE 102023130336**

(71) Applicants:
• **Deutsches Zentrum für Luft- und Raumfahrt e.V.
51147 Köln (DE)**

• **Universität der Bundeswehr München
85579 Neubiberg (DE)**

(72) Inventors:
• **Amao Oliva, Joel Alfredo
82234 Weßling (DE)**
• **Foix-Colonier, Nils
82234 Weßling (DE)**
• **Sica, Francescopaolo
85579 Neubiberg (DE)**

(74) Representative: **Fink Numrich
Patentanwälte PartmbB
Paul-Gerhardt-Allee 24
81245 München (DE)**

(54) **METHOD FOR COMPUTER-IMPLEMENTED GENERATION OF A DATA-DRIVEN MODEL FOR COMPUTER-IMPLEMENTED PROCESSING OF A SINGLE-LOOK COMPLEX (SLC) IMAGE**

(57) The invention refers to a method for computer-implemented generation of a data-driven model for computer-implemented processing of a single-look complex (SLC) image (10) captured with a SAR system adapted to obtain radar reflectivity, wherein the SLC image (10) comprises a real part and an imaginary part, and wherein the data-driven model is adapted to jointly despeckle and compress the SLC image (10). The generation of the data-driven model comprises the following steps:
- providing a training data set (TDS) comprising a plurality of SLC images (10) each of them comprising a real part and an imaginary part;
- training a neural network (NN) with the training data set (TDS), the neural network (NN) comprising an input for inputting either the real part or the imaginary part of a respective SLC image (10) of the plurality of SLC images (10) as input information, where a latent space (y) resulting from encoding the input information with an encoder (100) is concatenated and compressed to a compressed bitstream (MBS, SBS), and an output for outputting an estimated intensity ($\hat{I}$), where the estimated intensity ($\hat{I}$) results from splitting and decoding the compressed bitstream (MBS, SBS), the trained neural network (NN) representing the generated data-driven model.

Fig. 1

EP 4 549 994 A1

**Description**

The present invention relates to a method and an apparatus for computer-implemented generation of a data-driven model for computer-implemented processing of a single-look complex (SLC) image captured with a synthetic aperture radar (SAR) system adapted to obtain radar reflectivity. Furthermore, the invention relates to a method for computer-implemented processing of a SLC image captured with a SAR system adapted to obtain radar reflectivity, and a computer program product.

Over the past decade, space-born synthetic aperture radar (SAR) images have proven extremely useful for a wide range of civilian and military applications, from monitoring deforestation to detecting dark ships. However, acquiring, transmitting and processing these images is challenging on many levels.

To transmit data acquired by a satellite to the ground, a downlink is established by pointing a ground station antenna and the moving satellite as it passes. The maximum available downlink duration limits the amount of data that can be transmitted to the ground. In addition, a downlink operation is costly, as it is a technical task requiring high-end hardware and few companies offer it as a pay-per-use service. Considering these two reasons, maximizing the amount of data downlinked while minimizing the cost, it is desirable to compress transmitted data as much as possible.

Recent work on end-to-end compression of optical images has shown that deep learning can outperform some of the best classical methods, such as JPEG2000, a compression standard based on wavelet transforms. Nevertheless, the usability of SAR images is limited because they are strongly disturbed by a multiplicative and spatially correlated pseudo-noise effect called "speckle". Removing speckle while preserving resolution and image features is one of the most critical tasks in SAR imaging and hinders the possible interpretation of SAR results. In the past decades, the task of speckle removal has been tackled through various methods, such as filtering in a transformed space, the so-called homomorphic approach, as well as local and non-local methods. Despeckling has also seen some promising results using deep learning-based approaches. However, the fact that no noiseless SAR images, i.e., no ground truth, are available for training leads to more complex training approaches.

Recently, a training method that is independent of a deep learning architecture has shown state of the art despeckling performance while being simpler to implement than other supervised learning methods: a novel self-supervised training strategy has been developed that considers the real and imaginary parts of a SLC image, i.e., a focused complex image, to contain independent realizations of the speckle noise. This makes it possible to train a deep learning model with one realization as input and the other as reference. Since the network sees speckle as random noise, the model would not be able to reproduce it, resulting in a despeckling network.

In the field of compression of SAR images, recent approaches using deep learning have been proposed. Those methods only work on the task of compression alone, without performing any despeckling.

Training a neural network to denoise (or estimate the reflectivity) of SAR images can be formalized as choosing an architecture (also known as a model) that will be trained over a pair of (input/reference) data. Some training strategies can involve multiple steps of data preprocessing, a few training steps with couples of different kinds, and a specific use of the trained model in order to make the desired predictions. An example of such a multiple state approach can be found in the so-called SAR2SAR architecture of reference [1], where the proposed algorithm is trained by minimizing a difference between the input and output images in order to provide a despeckled version of the image.

In addition, self-supervised training strategies are known which are especially attractive as they have the advantage of not requiring ground truth, synthetic images, or synthetic noise. However, supervised training strategies have also good results in the literature, for example, one can perform temporal multi-looking to generate a "ground truth" image with up to 24 looks (as described in reference [2]). Afterwards, it is possible to use this data to train a supervised network for which the pair of (input/reference) pairs are respectively made of a single-look image and the multi-looked one. However, this method requires a lot of data from the same area. Additionally, it is necessary to co-register all those images, detect the temporal changes, and find a way to deal with them (i.e., masking detected areas that changed), all of this not being a trivial task.

Recently, a novel self-supervised training approach was developed and disclosed in reference [3] using the so-called "MERLIN" strategy, based on the idea that the real and imaginary parts of an SLC are two independent identically distributed realizations of the same signal. The fact that the real and imaginary parts are two realizations of the same signal specially implies also two realizations of the noise signals.

Based thereon, one can consider using the squared real part and the squared imaginary part as (input/reference) pairs to train a neural network. However, these pairs only have half of the power (found in each real or imaginary part) compared to the training a network using the total power of an intensity image. Regarding self-supervised training strategies, it is to be noted that they present advantages over other supervised methods. Indeed, it is considerably easier to build a dataset, avoid domainshift between the way it is trained and the way the network is applied (as shown in reference [4]), and is easier to implement compared to other training strategies.

Concerning compression of images, variational auto-encoders which represent a type of machine learning (ML) architecture, have shown good success in literature presenting even better compression ratios compared to classical compression methods (see, for example, references [5] and [6]). Compressing SAR images via variational auto-encoders have also seen some success in recent years. However, such architectures work directly on detected images and do not work directly on SLC images (see, for example, references [7] and [8]).

Finally, joined decompression and denoising approaches for optical images have also been explored in literature with good performance using ML approaches, such as disclosed in references [9] and [10]. However, they are not suitable for SAR images, since only works related to compression and despeckling have been carried out using classical methods as disclosed in references [11] and [12], thereby not using any state-of-the-art compression schemes based on ML.

Above mentioned stated of the art algorithms focusing on the compression of SAR images do not consider the fact that, prior to the compression task, despeckling the signal itself leads to higher compression rates and more efficient data transfer. Current machine-learning based deep speckling algorithms do not consider the task of compression in a jointly fashion.

It would be desirable to have an algorithm that processes despeckling and compression in a jointly manner. In order to properly approach this issue, it would be necessary that the data used during training corresponds to the same data to compress/filter, resulting in avoiding synthetic data. In addition, both tasks, despeckling and compression, would have to be solved simultaneously and optimized accordingly. Known algorithms considering a combination of compression and denoising refer to optical satellite images and not SAR data and thus are not suitable for processing the latter.

It is therefore an object of the present invention to provide a method and an apparatus for processing single-look complex (SLC) images captured with a SAR system adapted to obtain radar reflectivity which is able to jointly compress and despeckle the SLC images.

This object is solved by a method for computer-implemented generation of a data driven model for computer-implemented processing of the SLC image according to claim 1, a method for computer-implemented processing of a SLC image according to claim 10, an apparatus for computer-implemented processing of a SLC image according to claim 14 and a computer program product according to claim 15.

Preferred embodiments are set out in the dependent claims.

According to a first aspect, a method for computer-implemented generation of a data-driven model for computer-implemented processing of a single-look complex (SLC) image captured with a SAR system adapted to obtain radar reflectivity is provided. The SLC image comprises a real part and an imaginary part. The data-driven model is adapted to jointly despeckle and compress the SLC image.

The generation of the data-driven model comprises the following steps: according to a first step, a training data set is provided comprising a plurality of SLC images each of them comprising a real part and an imaginary part; according to a second step, a neural network is trained with the training data set, the neural network comprising an input for inputting either the real part or the imaginary part of a respective SLC image of the plurality of SLC images as input information, where a latent space resulting from encoding the input information with an encoder is concatenated and compressed to a compressed bitstream, and an output for outputting an estimated intensity. The estimated intensity results from splitting and decoding the compressed bitstream, where the trained neural network represents the generated data-driven model.

The joint compression and despeckling approach has the advantage that encoded despeckled images lead to better compression performance, since the overall entropy of the signal decreases after despeckling. It is furthermore capable of estimating and compressing the resulting reflectivity.

The method according to the invention is based on the concept of self-supervision for SAR despeckling, jointly with the latest compression methods based on deep network architectures. The method relies on a previously unpaired architecture and training strategy. The method for training a neural network is based on pairs of real/imaginary intensity images (SLC images) where, during training, resulting latent space is concatenated in order to train the network to compress two latent spaces during the actual application of the network. A concatenation of the real part of the imaginary part of an SLC image means doubling the number of channels to a desired number.

According to a preferred embodiment, a total reflectivity of pixels in the SLC image, in particular above a predetermined threshold corresponding to point-like scatterers, is obtained and the total reflectivity is divided in half, assigning it to its imaginary and real parts, respectively. This ensures that the neural networks can account for deterministic phases found in real data. The predetermined threshold may, for example, be selected to 9 dB corresponding to point-like scatterers.

According to a further preferred embodiment, the trained neural network is based on a variational autoencoder with hyperprior to process compression and despeckling simultaneously.

As such, the method according to the invention may use the self-supervised approach of noise2noise, MERLIN etc., which are known from prior art according to references [1] and [3], for example.

According to a further preferred embodiment, the concatenated latent space is transferred to a first quantizer and a first arithmetic encoder to output a despeckled and compressed main bitstream and transferred to a hyper-encoder, the output of which is transferred to a second quantizer and a second arithmetic encoder to output a despeckled and compressed side bitstream. The arithmetically decoded side bitstream is transferred to a hyper-decoder to estimate scales which are encoded in the main bitstream for further compression.

According to a further preferred embodiment, the squared real part or squared imaginary part of a respective SLC image are input to a neural network.

It is further preferred that training the neural network comprises calculating a loss function, which considers both compression and reflectivity estimation with the possibility to emphasize one or the other by including a parameter $\lambda$. Preferably, the loss corresponds to a relaxed rate-distortion optimization problem according to

$$\mathcal{L}(\hat{I}, Im) = R + \lambda D(\hat{I}_k, Im_k),$$

where $\mathcal{L}$ represents the loss function, $\hat{I}$ represents the estimated intensity (i.e., the output) of the neural network, $Re^2$ or $Im^2$ represents the squared real part or imaginary part (input to the neural network), D represents the joint despeckling/distortion loss, R the entropy of latents $\hat{y}$ and $\hat{z}$, and $\lambda$ represents a Lagrangian multiplier.

The loss function $\mathcal{L}$ is used to train the weights of the neural network.

According to a second aspect of the present invention, a method for computer-implemented processing of a SLC image captured with a SAR system adapted to obtain radar reflectivity is provided. The SLC image comprises a real part and an imaginary part. Both of them are input to a data-driven model. The estimated intensity image of the SLC image is generated with a data-driven model generated with a method according to one or more embodiments according to the invention.

Preferably, the real part and the imaginary part of the SLC image are encoded and concatenated.

It is further preferred that the real part and the imaginary part of the SLC image are encoded with the same encoder.

According to a further preferred embodiment, on the decoder side, the concatenated latent space is split into two latent spaces and subsequently decoded into their respectively estimations, where the estimated intensity image is obtained after adding the two estimations.

Unlike training, two different but very similar latent spaces are obtained and concatenated which are then compressed. On the decoder side, the concatenated latent space is first split into two and subsequently decoded into the respectively estimations of the intensity image. The final intensity image is then obtained after adding both of the estimations. Thus, a very efficient way of jointly despeckling and compressing SLC images can be provided.

According to a third aspect, an apparatus for computer-implemented processing of a SLC image captured with a SAR system adapted to obtain radar reflectivity is provided, wherein the SLC image comprises a real part and an imaginary part, both of them are input to a data-driven model. An estimated intensity image of the SLC image is generated, wherein the apparatus comprises a data-driven model generated by a method according to one or more embodiments of the present invention.

According to a fourth aspect of the present invention, a computer program product comprising program code stored on a machine-readable medium for performing a method according to one or more embodiments of the present invention is provided, when the program code is executed on a computer.

The invention will be further described more detailed by reference to the accompanying figures.

Fig. 1    shows a schematical drawing of a neural network architecture with hyperprior used for training the neural network according to the invention.

Fig. 2    shows a schematical drawing of the neural network architecture used for processing SLC images in order to obtain radar reflectivity.

Fig. 3    shows a diagram illustrating a rate-distortion performance based on a peak signal-to-nose ratio (PSNR) metric and the resulting bits-per-pixels (BPP).

The present invention relates on a concept of self-supervision for SAR despeckling, jointly with compression methods based on deep network architectures. The data-driven model which is a trained neural network NN described below performs despeckling and compression at the same time.

The proposed method relies on a previously unpaired architecture and training strategy. That means, training and prediction are performed in two different ways to optimize the compression task.

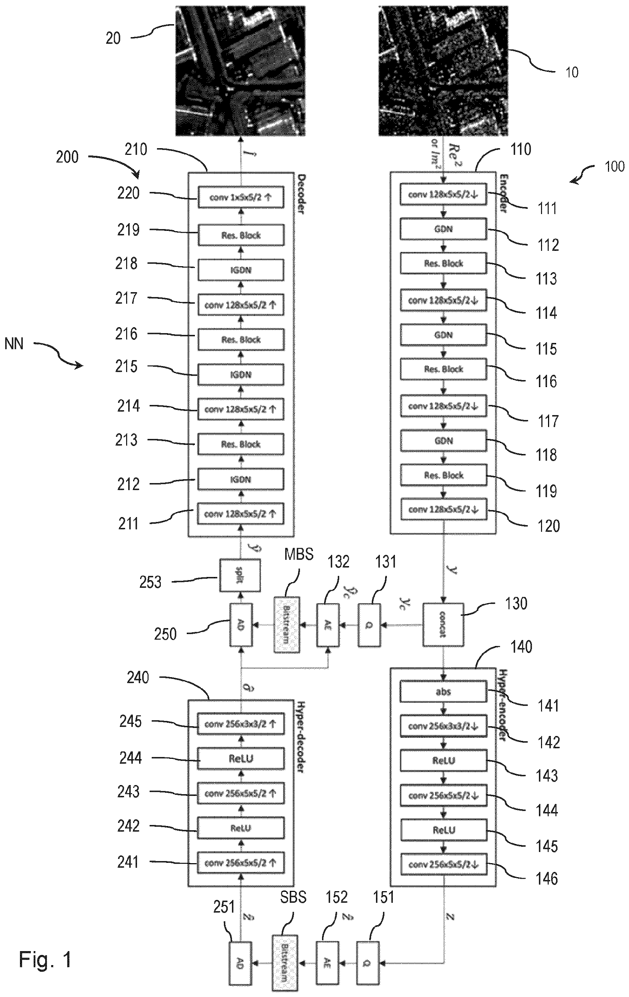

Fig. 1 illustrates a proposed network architecture using hyperprior for generation of the neural network for computer-implemented processing of a SLC image 10 captured with a not illustrated SAR system adapted to obtain radar reflectivity. As known to the skilled person, the SLC image 10 comprises a real part and an imaginary part. Training of the neural network is either conducted with the squared real part $Re^2$ or the squared imaginary part $Im^2$ of a respective SLC image 10. The neural network NN will be described in more detail with below.

$\pi$

The neural network NN comprises components of a transmitter 100 and a receiver 200. The transmitter 100 consists of an encoder 110, a concatenation unit 130, a quantizer 131, an arithmetic encoder 132, and a hyper-encoder 140 followed by a quantizer 151, and an arithmetic encoder 152.

The receiver 200 consists of a hyper-decoder 240, an arithmetic decoder 250, a splitter 251, and a decoder 210 providing an estimated intensity $\hat{I}$ of an intensity image 20. Generally, the neural network NN is based on the well-known self-supervised approach as given in references [1] and [3]. In addition to those self-supervised approaches, the concatenation unit 130 and the splitter 251 are added.

The encoder 110 comprises - in the following sequence - a down-sampling unit 111, an activation function (GDN) 112, a residual block 113, a down-sampling unit 114, an activation function (GDN) 115, a residual block 116, a down-sampling unit 117, an activation function (GDN) 118, a residual block 119 and a down-sampling unit 120. An input of the encoder 110 receives the squared real part $Re^2$ or the squared imaginary part $Im^2$ of the SLC image 10 and outputs a latent space $y$ resulting from encoding the input information ($Re^2$ or $Im^2$) with the encoder 110. The concatenation unit 130 concatenates the latent space $y$ during training, which means that the number of channels is doubled. The concatenated latent space $y_c$ is forwarded to both the quantizer 131, and the hyper-encoder 140.

The hyper-encoder 140 consists of an absolute value unit 141, a down-sampling unit 142, an activation function (ReLU) 143, a down-sampling unit 144, an activation (ReLU) function 145, and a down-sampling unit 146. The encoded concatenated latent space $y_c$ is forwarded to the quantizer 151 followed by the arithmetic encoder 152 in order to provide a side-bitstream SBS as an output of the transmitter 100. The bitstream SBS which is received by the receiver 200 as input information is decoded by arithmetic decoder 251 and forwarded to the hyper-decoder 240 of the receiver 200.

The hyper-decoder 240 consists of an up-sampling unit 241, an activation function (ReLU) 242, an up-sampling unit 243, an activation function (ReLU) 244, and an up-sampling unit 245. The hyper-decoder 240 provides an estimated scale $\hat{\sigma}$ which is forwarded to the arithmetic decoder 250 of the receiver 200 and the arithmetic encoder 132 of the transmitter 100. The arithmetic encoder 132 uses the estimated scale $\hat{\sigma}$ to transform the quantized concatenated latent space $\hat{y}_c$ into a bit symbol and provides it as main-bitstream MBS (further output of the transmitter 100). The main-bitstream MBS is also forwarded to the arithmetic decoder 250 of the receiver 200. The latter decodes the main-bitstream MBS using the estimated scale $\hat{\sigma}$ received from the hyper-encoder. The output of the arithmetic decoder 250 is forwarded to the splitter 251 which provides a quantized latent space $\hat{y}$.

The quantized latent space $\hat{y}$ represents the input information of the decoder 210. The decoder 210 consists of an up-sampling unit 211, an activation function (IGDN) 212, a residual block 213, an up-sampling unit 214, an activation function (IGDN) 215, a residual block 216, an up-sampling unit 217, an activation function (IGDN) 218, a residual block 219, and an up-sampling unit 220. The decoder output represents the output of the neural network NN and outputs the estimated intensity $\hat{I}$ where the estimated intensity $\hat{I}$ results from splitting and decoding the compressed bitstream. 20 represents the denoised intensity image which can be compared to the squared real part $Re^2$ or squared imaginary part $Im^2$ of the SLC image 10.

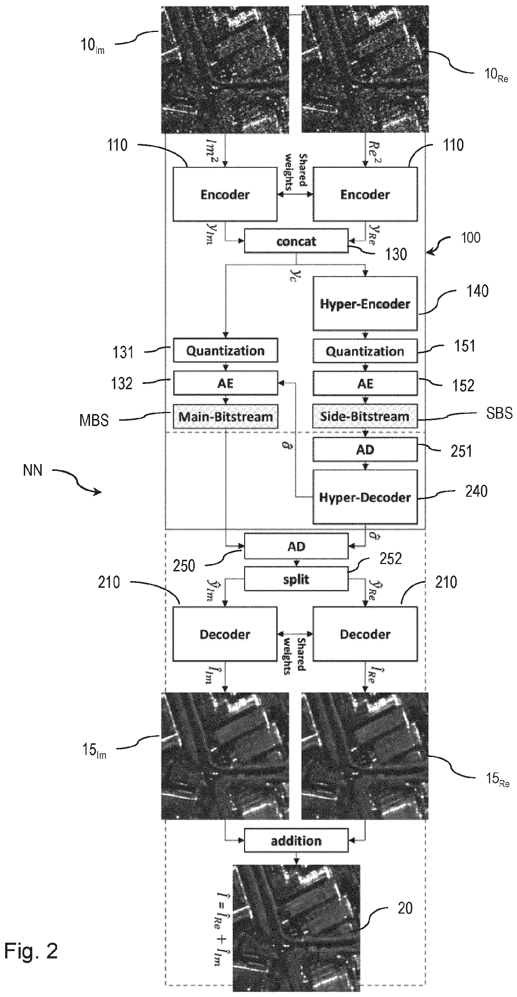

Fig. 2 illustrates the neural network used to predict the estimated intensity $\hat{I}$ of a SLC image.

The complex SLC image 10 is split into a first part comprising the real part $10_{Re}$ and a second part comprising the imaginary part $10_{Im}$, where both the squared real part $Re^2$ and squared imaginary part $Im^2$ of the SLC image 10 ($10_{Re}$, $10_{Im}$) are used as input to the neural network NN. Both the squared real part $Re^2$ and squared imaginary part $Im^2$ of the SLC image 10 are encoded using the neural network NN as described in Fig. 1 into latent spaces $y_{Re}$ and $y_{Im}$ to be concatenated by the concatenating unit 130. It is to be noted that, in contrast to training, the square of the real part and the imaginary part $10_{Re}$ and $10_{Im}$ are input to the encoder 110. For encoding the respective input information, the same encoder 110 using shared weights is used. Unlike training, two different but very similar latent spaces $y_{Re}$ and $y_{Im}$ are obtained and concatenated which are then compressed.

On the decoder side, the concatenated latent space is first split into two using the splitting unit 252 (resulting in $\hat{y}_{Re}$ and $\hat{y}_{Im}$) and subsequently decoded into their respective intensity estimations $\hat{I}_{Re}$ and $\hat{I}_{Im}$ resulting in respective intensity images $15_{Re}$ and $15_{Im}$. The intensity images $15_{Re}$ and $15_{Im}$ are then combined by an addition which results in the combined intensity image 20.

In Fig. 2, the components encircled with a solid line represent components of the transmitter 100, while the components encircled with a dashed line represent the components of the receiver 200. The hyper-decoder 240 appears in both the transmitter 100 and the receiver 200 since the estimated scales $\hat{\sigma}$ are known at the time of compression to the encoder 110 and the decoder 210.

As a result, a self-supervised machine learning framework for estimating and compressing the reflectivity coming from SAR imaging using neural networks, in particular convolutional neural networks, is proposed. Despeckling of SAR images with CNNs is known from prior art, in particular from [3]. The approach proposed in [3] allows to extend the original training strategy by using a variational autoencoder to focus on the task of compression and despeckling simultaneously. In addition, radiometric preservation of the resulting despeckled images is improved. The present invention goes beyond this proposal.

It is well-known that point-like scatterers exhibit a deterministic phase that appears differently in the real and imaginary parts of the SLC image. This effect leads to an inaccurate modeling of such scatterers which affects the radiometric accuracy during training and subsequently during reflectivity estimation. It is therefore proposed to improve the self-supervised training as described in [3] by detecting the total reflectivity of pixels above 9 dB (corresponding to said scatterers) and divided in half, assigning it to its imaginary end real parts, respectively, during the training phase. This ensures that the neural network can account for the deterministic phases found in real data.

Compression of SAR images with CNNs is already known from prior art. Deep learning-based image compression methods have several advantages over classical compression methods, such as JPEG and JPEG2000. In particular, deep learning-based methods can learn important features present in SAR images and avoid compressing redundant information, allowing for better compression performance in terms of rate-distortion ratios and visual clarity. The methods mentioned in references [13] and [14] try to compress already estimated (noisy) reflectivity coming from the detection of SLC images, further compressing redundant information in the form of speckle, but do not improve the compression rate by ignoring this information. In contrast, the neural network suggested and described above uses both the variational auto encoder scheme with hyperprior but trains the network in a way that the noise component is not estimated, thus increasing the compression rate.

In order to be able to jointly compress and despeckle SLC images, the proposed neural network relies on previously unpaired architecture and training strategy. Moreover, the training and the prediction steps are singular - for instance the network is used differently, in comparison to the training, when performing an inference task - and are enhanced in order to best answer joint compression and despeckling.

Therefore, a particular loss function is used to train the neural network NN, which considers both compression and reflectivity estimation, while offering the possibility to emphasize one or the other, using to a parameter $\lambda$. The loss is formulated as a relaxed rate-distortion (R function for estimation and D for distortion estimation) optimization problem with the introduction of the Lagrangian multiplier $\lambda$. The distortion term acts not only to measure the difference between the input image but rather a pair of noisy images to estimate the noise-free reflectivity whilst the R term acts to minimize the resulting bitrate.

The total loss function is based on the rate-distortion optimization of two terms representing compression and distortion/despeckling given as:

$$\mathcal{L}(\hat{\boldsymbol{I}}, \boldsymbol{Im}) = R + \lambda D(\hat{I}_k, Im_k)$$

$$= R(\hat{y}) + R(\hat{z}) + +\lambda \sum_k \boxdot \frac{1}{2}\log \hat{I}_k + \exp\left(2\log |Im_k| - \log \hat{I}_k\right)$$

where D represents the joint despeckling/distortion loss, R the entropy of the latents $\hat{y}$ and $\hat{z}$. The input $\boldsymbol{Re}^2$ (or $\boldsymbol{Im}^2$) and output (estimated) intensity $\hat{\boldsymbol{I}}$ to the network are log-transformed and normalized inside the network.

The loss function considered corresponds to a training strategy in which the input of the network $\boldsymbol{Re}^2$ yields the output intensity $\hat{\boldsymbol{I}}$, while the reference used to perform a gradient descent is the squared imaginary part $\boldsymbol{Im}^2$. To train the network on more examples, $\boldsymbol{Re}^2$ and $\boldsymbol{Im}^2$ may be randomly swapped, as shown as the input of the encoder in Fig. 1.

The rate R is the expected code length (bitrate) of the distortions of the latent spaces $y$ and $z$, which are minimized during training using entropy models. The joint despeckling/distortion loss then corresponds to the sum over all pixels of the opposite of the lock-likelihood of marginal distributions (in log-scale).

The inventors proved success of the proposed methodology. In the following, some results of the neural network trained with different hyperparameters are described in order to explore the possibilities of what constitutes an optimal rate-distortion tradeoff in terms of classical compression metrics like peak signal-to-noise ratio (PSNR). In particular, the parameter $\lambda$ acts as a trade-off parameter between the amount of distortion and compression, with lower values favoring higher compression rates at the cost of lowering the amount of details and textual information in the final reflectivity.

One of the challenges is the fact that there is no ground truth for noise-free reflectivities, which are required to compute a PSNR metric. In order to overcome this challenge and fully analyze the effects that despeckling has on compressing SAR images, a multitemporal approach (as described in reference [15]) has been taken to create a "noise-free" reflectivity image from 21 TerraSAR-X co-registered intensity images that can act as a ground-truth reference for the assessment of the distortion coming from the proposed joint despeckling and compression schemes.

A resulting multitemporal average image was acquired by processing acquisitions corresponding to $\pm$ 2 months with respect to the noisy acquisition, in order to not mix different types of scattering mechanisms during the creation of the temporal image. The PSNR measured the distortion (usually in decibels or dB) between the original and compressed image, with the higher reconstruction yielding higher dB value. PSNR is useful to compare different compression schemes. It can be defined as:

$$\text{PSNR}(A, \hat{A}) = 10 \log_{10} \frac{\max(A)}{\sqrt{\text{MSE}(A, \hat{A})}}$$

where *A* represents the square root of the "noise-free" reflectivity, and *A* represents the squared root of the estimated compressed reflectivity. MSE stands for the mean-square-error estimator, measuring the mean squared error on a pixel basis. In order to properly compare to the state of the art, two baselines were established:

- MERLIN-Baseline (L1): A joint approach using the MERLIN approach to estimate the reflectivities, followed by a compression using the JPEG2000 scheme.
- Noisy-Baseline (L2): A joint approach not filtering the estimated (noisy) reflectivity, followed by a compression using the JPEG2000 scheme.
- SAR-BM3D [16]: Although this filter doesn't utilize machine learning for the estimation of reflectivities, it was utilized since it delivers excellent radiometric performance and can be used as a reference point of the estimated reflectivities.

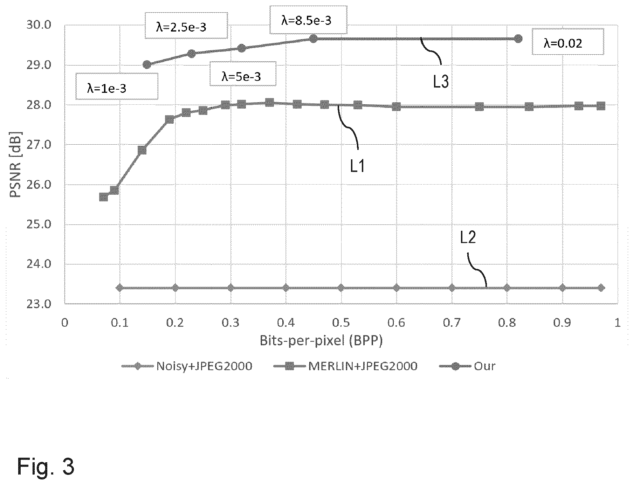

The results of the rate-distortion performance based on the PSNR and the resulting bits-per-pixels (BPP) over the temporal image are shown in Fig. 3. Based on these results, a value of parameter λ of 5e-3 appears to be optimal considering the resulting BPP of 0.3 and the increased value of PSNR of around 1.5 dB compared to MERLIN-Baseline (L1) and over 6 dB compared to the Noisy-Baseline (L2). The poor performance of the L2-baseline can be explained clearly, since the "noise-free" reflectivity, obtained by averaging a large number of acquisitions, was used as reference to compute the PSNR. The results obtained with the proposed method (L3) and the comparison with the L2-baseline can be seen in Fig. 3 as well.

Additionally, to detect biases in the compressed reflectivities, several indicators can be utilized:

- Mean of image (MoI): should be preserved during filtering.
- Ratio image: after filtering, the ratio image should contain only speckle. The presence of structures in the ratio image can be sign of overfiltering.
- Mean of ratio (MoR): the mean of the ratio image should be as close to 1 in order to indicate good radiometric preservation.
- Variance of ratio (VoR): If the MoR is then close to 1, a VoR less than 1 usually indicates undersmoothing and a value greater than 1 indicates over-smoothing.

Speckle reduction over homogeneous areas is usually measured in terms of the equivalent number of looks (ENL):

$$\text{ENL} = \frac{\mu_r^2}{\sigma_r^2}$$

where $\mu_r$ represents the mean value over a homogeneous area and $\sigma_r$ is the standard deviation computed over the same area. These results are summarized in table 1 and show the best performance for the proposed method.

The results over a homogeneous area can be taken from table 1 below:

|  | MoI | MoR | VoR | ENL |
|---|---|---|---|---|
| Averaged image | 0.178 | 1.12 | 1.11 | 10.31 |
| Noisy image | 0.209 | - | - | 1 |
| Our λ = 2.5e-3 | 0.178 | 1.04 | 0.96 | 288.26 |
| Our λ = 5e-3 | 0.189 | 1.03 | 0.94 | 254.3 |
| Our λ = 0.02 | 0.198 | 0.99 | 0.88 | 224.7 |
| MERLIN | 0.19 | 0.96 | 0.81 | 99.3 |
| MERLIN + JPEG2000 | 0.17 | 0.97 | 0.85 | 406.03 |
| SAR-BM3D | 0.19 | 0.89 | 0.35 | 9.6 |

In the presence of corner reflectors in an image, two additional metrics can also be used to verify the preservation of the radiometric capabilities of the estimation by using corner reflectors, i.e., artificial radar reflectors widely used for SAR calibration, found in the image. These two metrics are the $C_{nn}$, meant to measure the radiometric preservation of the strong scatterer, and the $C_{bg}$ which attempts to measure the preservation of the relation between the average intensity of the background compared to the strong scatterer as given in reference [17]. Said metrics can be formulated as follows:

$$C_{\mathrm{nn}} = 10 \log_{10} \frac{r_{\mathrm{CF}}}{r_{\mathrm{NN}}}$$

$$C_{\mathrm{bg}} = 10 \log_{10} \frac{r_{\mathrm{CF}}}{r_{\mathrm{BG}}}$$

where $r_{CF}$ represents the intensity observed at the strong scatterer, $r_{NN}$ the average intensity of the 8 surrounding pixels of the scatterer and $r_{BG}$ is the average intensity of the background.

The results of this method are shown in table 2, again with a proposed method closest to the original values of the noisy image:

|  | $C_{nn}$ [dB] | $C_{bg}$ [dB] |
| --- | --- | --- |
| Noisy image | 26.75 | 42.54 |
| Our λ = 2.5e-3 | 27.98 | 44.23 |
| Our λ = 5e-3 | 28.11 | 44.47 |
| Our λ = 0.02 | 27.29 | 43.29 |
| MERLIN | 25.69 | 35.9 |
| MERLIN + JPEG2000 | 24.56 | 32.86 |
| SAR-BM3D | 25.63 | 41.6 |

The present invention provides a plurality of advantages for different applications.

On-board Image Data Reduction for efficient data transfer and reduced ground station load can be provided. The main bottleneck in Earth observation systems is that while the number of satellites is increasing and the amount of data is growing, the number of ground stations cannot scale with the number of acquiring satellites. This is especially true for SAR systems, which require a sun-synchronous orbit, usually in Low Earth Orbit (LEO), and therefore the ground stations are mainly located at the poles, the place with the lowest revisit time. At the poles, where to build ground stations is limited and by far not scalable together with the number of satellites and nanosatellites. This trend will only increase in the future, requiring new solutions such as on-board processing and compression.

Furthermore, efficient SAR image storage is provided. SAR data occupy a lot of storage space today. Long SAR image archives are now a critical problem for mission ground segments. New SAR systems are achieving ever greater coverage and shorter revisit times, resulting in very high data throughput. The Sentinel-1 mission, for example, produces between 600 and 800 GB of data per day, and future missions will produce even more.

Finally, the proposed method simplifies time series processing. SAR time series applications are the most memory intensive application today and very often a main limitation is the amount of data that can be processed due to memory constraints. By compressing images, intermediate products do not need to be stored in memory as is, but in a compressed format that can be decompressed when the image is needed.

Additional applications include satellite/airborne SAR downlinks, time-constrained automatic/human SAR image interpretation for land monitoring, targets detection, and so on, and large-scale processing, such as the generation of global products.

Reference signs

10      SLC image
10$_{Re}$      real part of SLC image 10
10$_{Im}$      imaginary part of SLC image
15$_{Re}$      intensity image of real part of SLC image 10
15$_{Im}$      intensity image of imaginary part of SLC image
20      (combined) intensity image
100      transmitter
110      encoder
111      down-sampling unit
112      activation function (GDN)

| 113 | residual block |
| 114 | down-sampling unit |
| 115 | activation function (GDN) |
| 116 | residual block |
| 117 | down-sampling unit |
| 118 | activation function (GDN) |
| 119 | residual block |
| 120 | down-sampling unit |
| 130 | concatenation unit |
| 131 | quantizer (Q) |
| 132 | arithmetic encoder (AE) |
| 140 | hyper-encoder |
| 141 | absolute value |
| 142 | down-sampling unit |
| 143 | activation function (ReLU) |
| 144 | down-sampling unit |
| 145 | activation function (ReLU) |
| 146 | down-sampling unit |
| 151 | quantizer (Q) |
| 152 | arithmetic encoder (AE) |
| MBS | main bitstream |
| SBS | side bitstream |
| 200 | receiver |
| 210 | decoder |
| 211 | up-sampling unit |
| 212 | activation function (IGDN) |
| 213 | residual block |
| 214 | up-sampling unit |
| 215 | activation function (IGDN) |
| 216 | residual block |
| 217 | up-sampling unit |
| 218 | activation function (IGDN) |
| 219 | residual block |
| 220 | up-sampling unit |
| 240 | hyper-decoder |
| 241 | up-sampling unit |
| 242 | activation function (ReLU) |
| 243 | up-sampling unit |
| 244 | activation function (ReLU) |
| 245 | up-sampling unit |
| 250 | arithmetic decoder (AD) |
| 251 | arithmetic decoder (AD) |
| 252 | splitter |
| NN | neural network |
| $y$ | latent space |
| $y_c$ | concatenated latent space |
| $\hat{I}_{Re}$, $\hat{I}_{Im}$, | estimations |
| $\hat{y}$ | latent (latent space) |
| $\hat{z}$ | latent (latent space) |
| $\mathcal{L}$ | loss function |
| $\hat{I}$ | estimated intensity (output) to the |
| $Re^2$ | squared real part (input) |
| $Im^2$ | imaginary part (input) |
| $D$ | joint despeckling/distortion loss |
| $R$ | entropy of latents $\hat{y}$ and $\hat{z}$ |
| $\lambda$ | parameter (Lagrangian multiplier) |

References

[1] Dalsasso, E., Denis, L., & Tupin, F. (2021). SAR2SAR: A Semi-Supervised Despeckling Algorithm for SAR Images. IEEE Journal of Selected Topics in Applied Earth Observations and Remote Sensing, 14, 4321-4329.

[2] Mazza, A., Scarpa, G., Verdoliva, L., & Poggi, G. (2021). Impact of Training Set Design in CNN-Based SAR Image Despeckling. In 2021 IEEE International Geoscience and Remote Sensing Symposium IGARSS (pp. 415-418).

[3] Dalsasso, E., Denis, L., & Tupin, F. (2022). As If by Magic: Self-Supervised Training of Deep Despeckling Networks With MERLIN. IEEE Transactions on Geoscience and Remote Sensing, 60, 1-13.

[4] Dalsasso, E., Denis, L., Muzeau, M., & Tupin, F. (2022). Self-supervised training strategies for SAR image despeckling with deep neural networks. In 14th European Conference on Synthetic Aperture Radar (EUSAR).

[5] Ballé, J., Laparra, V., & Simoncelli, E. (2017). End-to-end Optimized Image Compression. arXiv:1611.01704.

[6] Ballé, J., Minnen, D., Singh, S., Hwang, S., & Johnston, N. (2018). Variational image compression with a scale hyperprior. arXiv: 1802.01436.

[7] Xu, Q., Xiang, Y., Di, Z., Fan, Y., Feng, Q., Wu, Q., & Shi, J. (2022). Synthetic Aperture Radar Image Compression Based on a Variational Autoencoder. IEEE Geoscience and Remote Sensing Letters, 19, 1-5.

[8] Di, Z., Chen, X., Wu, Q., Shi, J., Feng, Q., & Fan, Y. (2022). Learned Compression Framework With Pyramidal Features and Quality Enhancement for SAR Images. IEEE Geoscience and Remote Sensing Letters, 19, 1-5.

[9] Cheng, K., Xie, Y., & Chen, Q. (2022). Optimizing image compression via joint learning with denoising. In Computer Vision-ECCV 2022: 17th European Conference, Tel Aviv, Israel, October 23-27, 2022, Proceedings, Part XIX (pp. 56-73).

[10] Oliveira, V., Chabert, M., Oberlin, T., Poulliat, C., Bruno, M., Latry, C., Carlavan, M., Henrot, S., Falzon, F., & Camarero, R. (2022). Satellite Image Compression and Denoising With Neural Networks. IEEE Geoscience and Remote Sensing Letters, 19, 1-5.

[11] Zhaohui Zeng, & Cumming, I. (2001). SAR image data compression using a tree-structured wavelet transform. IEEE Transactions on Geoscience and Remote Sensing, 39(3), 546-552.

[12] Mercier, G. (2001). Despeckle-based SAR image compression. In IGARSS 2001. Scanning the Present and Resolving the Future. Proceedings. IEEE 2001 International Geoscience and Remote Sensing Symposium (Cat. No.01CH37217) (pp. 100-102 vol.1).

[13] Xu, Q., Xiang, Y., Di, Z., Fan, Y., Feng, Q., Wu, Q., & Shi, J. (2022). Synthetic Aperture Radar Image Compression Based on a Variational Autoencoder. IEEE Geoscience and Remote Sensing Letters, 19, 1-5.

[14] Di, Z., Chen, X., Wu, Q., Shi, J., Feng, Q., & Fan, Y. (2022). Learned Compression Framework With Pyramidal Features and Quality Enhancement for SAR Images. IEEE Geoscience and Remote Sensing Letters, 19, 1-5.

[15] Vitale, S., Ferraioli, G., & Pascazio, V. (2021). Analysis on the building of training dataset for deep learning SAR despeckling. IEEE Geoscience and Remote Sensing Letters, 19, 1-5.

[16] Parrilli, S., Poderico, M., Angelino, C., & Verdoliva, L. (2012). A Nonlocal SAR Image Denoising Algorithm Based on LLMMSE Wavelet Shrinkage. IEEE Transactions on Geoscience and Remote Sensing, 50(2), 606-616.

[17] Di Martino, G., Poderico, M., Poggi, G., Riccio, D., & Verdoliva, L. (2014). Benchmarking Framework for SAR Despeckling. IEEE Transactions on Geoscience and Remote Sensing, 52(3), 1596-1615.

**Claims**

1. A method for computer-implemented generation of a data-driven model for computer-implemented processing of a single-look complex (SLC) image (10) captured with a SAR system adapted to obtain radar reflectivity, wherein the SLC image (10) comprises a real part and an imaginary part, and wherein the data-driven model is adapted to jointly despeckle and compress the SLC image (10), wherein the generation of the data-driven model comprises the following steps:

   - providing a training data set (TDS) comprising a plurality of SLC images (10) each of them comprising a real part and an imaginary part;
   - training a neural network (NN) with the training data set (TDS), the neural network (NN) comprising an input for inputting either the real part or the imaginary part of a respective SLC image (10) of the plurality of SLC images (10) as input information, where a latent space (y) resulting from encoding the input information with an encoder (100) is concatenated and compressed to a compressed bitstream (MBS, SBS), and an output for outputting an estimated intensity ($\hat{I}$), where the estimated intensity ($\hat{I}$) results from splitting and decoding the compressed bitstream (MBS, SBS), the trained neural network (NN) representing the generated data-driven model.

2. The method according to claim 1, wherein a total reflectivity of pixels in the SLC image (10), in particular above a predetermined threshold corresponding to point-like scatterers, is obtained and the total reflectivity is divided in half, assigning it to its imaginary and real parts, respectively.

3. The method according to claim 1 or 2, wherein the trained neural network (NN) is based on a variational autoencoder with hyperprior to process compression and despeckling simultaneously.

4. The method according to one of the preceding claims, wherein the concatenated latent space ($y_c$) is transferred to a first quantizer (131) and a first arithmetic encoder (132) to output a despeckled and compressed main bitstream (MBS) and transferred to a hyper-encoder (140) the output of which is transferred to a second quantizer (151) and a second arithmetic encoder (152) to output a despeckled and compressed side bitstream (SBS).

5. The method according to claim 4, wherein the (arithmetically decoded) side bitstream (SBS) is transferred to a hyper-decoder (240) to estimate scales ($\hat{\sigma}$) which are encoded in the main bitstream (MBS) for further compression.

6. The method according to one of the preceding claims, wherein the squared real part or the squared imaginary part of a respective SLC image (10) are input to the neural network (NN).

7. The method according to one of the preceding claims, wherein training the neural network (NN) comprises calculating a loss function ($\mathcal{L}$), which considers both compression and reflectivity estimation with the possibility to emphasize one or the other by including a parameter ($\lambda$).

8. The method according to claim 7, wherein the loss corresponds to a relaxed rate-distortion optimization problem according to:

$$\mathcal{L}(\hat{I}, Im) = R + \lambda D(\hat{I}_k, Im_k)$$

where ($\mathcal{L}$) represents the loss function, $\hat{I}$ represents the estimated intensity (output) to the neural network, $Re^2$ or $Im^2$ represents the squared real part or imaginary part (input), D represents the joint despeckling/distortion loss, R the entropy of latents $\hat{y}$ and $\hat{z}$, and $\lambda$ represents a Lagrangian multiplier.

9. The method according to claim 7 or 8, where the loss function ($\mathcal{L}$) is used to train weights of the neural network (NN).

10. Method for computer-implemented processing of a single-look complex (SLC) image captured with a SAR system adapted to obtain radar reflectivity, wherein the SLC image (10) comprises a real part and an imaginary part both of them are input to a data-driven model, and wherein an estimated intensity image (7) of the SLC image (10) is generated with a data-driven model generated with a method according to any one of claims 1 to 9.

11. The method according to claim 10, wherein both the real part and the imaginary part of the SLC image (10) are encoded and concatenated.

12. The method according to claim 11, wherein the real part and the imaginary part of the SLC image (10) are encoded with the same encoder.

13. The method according to one of claims 10 to 12, wherein on the decoder side the concatenated latent space ($y_c$) is split into two latent spaces (y) and subsequently decoded into their respectively estimations ($\hat{I}_{Re}$, $\hat{I}_{Im}$), where the estimated intensity image ($\hat{I}$) is obtained after adding the two estimations ($\hat{I}_{Re}$, $\hat{I}_{Im}$).

14. An apparatus for computer-implemented processing of a single-look complex (SLC) image captured with a SAR system adapted to obtain radar reflectivity, wherein the SLC image (10) comprises a real part and an imaginary part both of them are input to a data-driven model, and wherein an estimated intensity image ($\hat{I}$) of the SLC image (10) is generated, wherein the apparatus comprises a data-driven model generated by a method according to any one of claims 1 to 9.

15. A computer program product comprising program code stored on a machine-readable medium for performing a method according to any one of claims 1 to 9, when the program code is executed on a computer.

Fig. 1

Fig. 2

Fig. 3

Europäisches
Patentamt

European
Patent Office

Office européen
des brevets

# EUROPEAN SEARCH REPORT

Application Number

EP 24 20 9688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GLEICH D ET AL: "Model based SAR data compression", GEOSCIENCE AND REMOTE SENSING SYMPOSIUM, 2005. IGARSS '05. PROCEEDINGS . 2005 IEEE INTERNATIONAL SEOUL, KOREA 25-29 JULY 2005, PISCATAWAY, NJ, USA,IEEE, vol. 1, 25 July 2005 (2005-07-25), pages 156-159, XP010848942, DOI: 10.1109/IGARSS.2005.1526128 ISBN: 978-0-7803-9050-8 * the whole document * | 1-15 | INV. G01S7/41 G01S13/90 H04N19/00 |
| A | YOMMY AIYEOLA SIKIRU ET AL: "SAR image despeckling and compression using K-nearest neighbour based lee filter and wavelet", 2015 8TH INTERNATIONAL CONGRESS ON IMAGE AND SIGNAL PROCESSING (CISP), IEEE, 14 October 2015 (2015-10-14), pages 158-167, XP032867076, DOI: 10.1109/CISP.2015.7407868 [retrieved on 2016-02-16] * the whole document * | 1-15 | |
| A,D | XU QIHAN ET AL: "Synthetic Aperture Radar Image Compression Based on a Variational Autoencoder", IEEE GEOSCIENCE AND REMOTE SENSING LETTERS, vol. 19, 26 July 2021 (2021-07-26), XP093253357, USA ISSN: 1545-598X, DOI: 10.1109/LGRS.2021.3097154 * the whole document * -/-- | 1-15 | TECHNICAL FIELDS SEARCHED (IPC) G01S H04N |

The present search report has been drawn up for all claims

| Place of search | Date of completion of the search | Examiner |
|---|---|---|
| Munich | 24 February 2025 | Rudolf, Hans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

# EUROPEAN SEARCH REPORT

Application Number

EP 24 20 9688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GIULIA FRACASTORO ET AL: "Deep learning methods for SAR image despeckling: trends and perspectives", ARXIV.ORG, CORNELL UNIVERSITY LIBRARY, 201 OLIN LIBRARY CORNELL UNIVERSITY ITHACA, NY 14853, 10 December 2020 (2020-12-10), XP081833712, * the whole document * | 1-15 | |
| A | LATTARI FRANCESCO ET AL: "Deep Learning for SAR Image Despeckling", REMOTE SENSING, vol. 11, no. 13, 28 June 2019 (2019-06-28), XP055923544, DOI: 10.3390/rs11131532 * the whole document * | 1-15 | |

**TECHNICAL FIELDS SEARCHED (IPC)**

The present search report has been drawn up for all claims

| Place of search | Date of completion of the search | Examiner |
|---|---|---|
| Munich | 24 February 2025 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DALSASSO, E.** ; **DENIS, L.** ; **TUPIN, F.** SAR2SAR: A Semi-Supervised Despeckling Algorithm for SAR Images. *IEEE Journal of Selected Topics in Applied Earth Observations and Remote Sensing*, 2021, vol. 14, 4321-4329
- **MAZZA, A** ; **SCARPA, G.** ; **VERDOLIVA, L.** ; **POGGI, G.** Impact of Training Set Design in CNN-Based SAR Image Despeckling. *2021 IEEE International Geoscience and Remote Sensing Symposium IGARSS*, 2021, 415-418
- **DALSASSO, E.** ; **DENIS, L.** ; **TUPIN, F.** As If by Magic: Self-Supervised Training of Deep Despeckling Networks With MERLIN. *IEEE Transactions on Geoscience and Remote Sensing*, 2022, vol. 60, 1-13
- **DALSASSO, E.** ; **DENIS, L.** ; **MUZEAU, M.** ; **TUPIN, F.** Self-supervised training strategies for SAR image despeckling with deep neural networks. *14th European Conference on Synthetic Aperture Radar (EUSAR)*, 2022
- **BALLÉ, J.** ; **LAPARRA, V.** ; **SIMONCELLI, E.** End-to-end Optimized Image Compression. *arXiv:1611.01704*, 2017
- **BALLÉ, J.** ; **MINNEN, D.** ; **SINGH, S.** ; **HWANG, S.** ; **JOHNSTON, N.** Variational image compression with a scale hyperprior. *arXiv: 1802.01436*, 2018
- **XU, Q.** ; **XIANG, Y.** ; **DI, Z.** ; **FAN, Y.** ; **FENG, Q** ; **WU, Q.** ; **SHI, J.** Synthetic Aperture Radar Image Compression Based on a Variational Autoencoder. *IEEE Geoscience and Remote Sensing Letters*, 2022, vol. 19, 1-5
- **DI, Z.** ; **CHEN, X.** ; **WU, Q.** ; **SHI, J.** ; **FENG, Q.** ; **FAN, Y.** Learned Compression Framework With Pyramidal Features and Quality Enhancement for SAR Images. *IEEE Geoscience and Remote Sensing Letters*, 2022, vol. 19, 1-5
- **CHENG, K.** ; **XIE, Y.** ; **CHEN, Q.** Optimizing image compression via joint learning with denoising. *Computer Vision-ECCV 2022: 17th European Conference, Tel Aviv, Israel*, 2022, 56-73

- **OLIVEIRA, V.** ; **CHABERT, M.** ; **OBERLIN, T.** ; **POULLIAT, C.** ; **BRUNO, M.** ; **LATRY, C.** ; **CARLAVAN, M.** ; **HENROT, S.** ; **FALZON, F.** ; **CAMARERO, R.** Satellite Image Compression and Denoising With Neural Networks. *IEEE Geoscience and Remote Sensing Letters*, 2022, vol. 19, 1-5
- **ZHAOHUI ZENG** ; **CUMMING, I.** SAR image data compression using a tree-structured wavelet transform. *IEEE Transactions on Geoscience and Remote Sensing*, 2001, vol. 39 (3), 546-552
- **MERCIER, G.** Despeckle-based SAR image compression. In IGARSS 2001. Scanning the Present and Resolving the Future. Proceedings. *IEEE 2001 International Geoscience and Remote Sensing Symposium*, 2001, vol. 1, 100-102
- **XU, Q.** ; **XIANG, Y.** ; **DI, Z** ; **FAN, Y.** ; **FENG, Q.** ; **WU, Q.** ; **SHI, J.** Synthetic Aperture Radar Image Compression Based on a Variational Autoencoder. *IEEE Geoscience and Remote Sensing Letters*, 2022, vol. 19, 1-5
- **DI, Z.** ; **CHEN, X.** ; **WU, Q.** ; **SHI, J.** ; **FENG, Q.** ; **FAN, Y.** Learned Compression Framework With Pyramidal Features and Quality Enhancement for SAR Images.. *IEEE Geoscience and Remote Sensing Letters*, 2022, vol. 19, 1-5
- **VITALE, S.** ; **FERRAIOLI, G.** ; **PASCAZIO, V.** Analysis on the building of training dataset for deep learning SAR despeckling. *IEEE Geoscience and Remote Sensing Letters*, 2021, vol. 19, 1-5
- **PARRILLI, S.** ; **PODERICO, M.** ; **ANGELINO, C.** ; **VERDOLIVA, L.** A Nonlocal SAR Image Denoising Algorithm Based on LLMMSE Wavelet Shrinkage. *IEEE Transactions on Geoscience and Remote Sensing*, 2012, vol. 50 (2), 606-616
- **DI MARTINO, G.** ; **PODERICO, M.** ; **POGGI, G.** ; **RICCIO, D.** ; **VERDOLIVA, L.** Benchmarking Framework for SAR Despeckling.. *IEEE Transactions on Geoscience and Remote Sensing*, 2014, vol. 52 (3), 1596-1615